# EUROPÄISCHE PATENTSCHRIFT

(11) **EP 3 847 067 B1**
(45) Veröffentlichungstag und Bekanntmachung des Hinweises auf die Patenterteilung: **09.10.2024**
(21) Anmeldenummer: 19728362.5
(22) Anmeldetag: 27.05.2019
(51) Int. Cl.: B60W 30/18, B60W 30/16, B60W 50/14, B60W 50/16, B60W 30/095

(54) **VERFAHREN UND VORRICHTUNG ZUM ABSICHERN EINES ÜBERHOLVORGANGS EINES AUF EIN FAHRRAD AUFFAHRENDEN FAHRZEUGS**
METHOD AND DEVICE FOR MAKING SAFE AN OVERTAKING PROCEDURE FOR A VEHICLE APPROACHING A BICYCLE
PROCÉDÉ ET DISPOSITIF PERMETTANT DE RENDRE PLUS SÛR UNE OPÉRATION DE DÉPASSEMENT EFFECTUÉE PAR UN VÉHICULE SERRANT DE PRÈS UNE BICYCLETTE

(30) Priorität: 04.09.2018 DE 102018214962
(43) Veröffentlichungstag der Anmeldung: 14.07.2021
(73) Patentinhaber: Robert Bosch GmbH, 70442 Stuttgart (DE)
(72) Erfinder: GELDNER, Daniel, 75233 Tiefenbronn (DE)
(86) Internationale Anmeldenummer: PCT/EP2019/063698
(87) Internationale Veröffentlichungsnummer: WO 2020/048651

(56) Entgegenhaltungen:
- EP-A1- 3 150 465
- DE-A1- 102010 063 420
- DE-A1- 102015 212 583
- DE-A1- 102016 223 579
- US-B1- 9 227 632

## Beschreibung

### Gebiet der Erfindung

Die Erfindung betrifft ein Verfahren und eine Vorrichtung zum Absichern eines Überholvorgangs eines auf ein Fahrrad auffahrenden Fahrzeugs.

### Stand der Technik

In einem Fahrzeug können verschiedene Assistenzsysteme implementiert sein. Beispielsweise kann ein Abstandsregeltempomat das Fahrzeug auf einer eingestellten Zielgeschwindigkeit halten, so lange ein an die Zielgeschwindigkeit angepasster Sicherheitsabstand zu einem vorausfahrenden Fahrzeug eingehalten wird. Wird der Sicherheitsabstand unterschritten, so reduziert der Abstandsregeltempomat die Geschwindigkeit, bis das Fahrzeug mit einer Geschwindigkeit des vorausfahrenden Fahrzeugs fährt und dem vorausfahrenden Fahrzeug mit einem an die reduzierte Geschwindigkeit angepassten Sicherheitsabstand folgt.

US 9,227,632 B1 beschreibt ein Verfahren eine Pfadplanung für ein Ausweichlenkmanöver.

### Offenbarung der Erfindung

Vor diesem Hintergrund werden mit dem hier vorgestellten Ansatz ein Verfahren zum Absichern eines Überholvorgangs eines auf ein Fahrrad auffahrenden Fahrzeugs und eine Vorrichtung zum Absichern eines Überholvorgangs eines auf ein Fahrrad auffahrenden Fahrzeugs, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, zusätzlich zu einem longitudinalen Sicherheitsabstand zu einem Fahrrad einen lateralen Sicherheitsabstand zu dem Fahrrad einzuhalten. Dabei kann der laterale Sicherheitsabstand auch bei einem beengten Verkehrsraum eingehalten werden.

Es wird ein Verfahren gemäß Anspruch 1 zum Absichern eines Überholvorgangs eines auf ein Fahrrad auffahrenden Fahrzeugs vorgeschlagen, bei dem ein zukünftiger Weg des Fahrzeugs automatisiert geändert wird, wenn ein lateraler Sicherheitsabstand zu einer wahrscheinlichen Trajektorie des Fahrrads unterschritten wird, wobei das Fahrzeug auf dem geänderten Weg geführt wird, wenn er innerhalb eines verfügbaren Verkehrsraums verläuft, wobei der verfügbare Verkehrsraum unter Verwendung einer erkannte Verkehrszeichen repräsentierenden Verkehrszeicheninformation bestimmt wird..

Ideen zu Ausführungsformen der vorliegenden Erfindung können unter anderem als auf den nachfolgend beschriebenen Gedanken und Erkenntnissen beruhend angesehen werden.

Unter Verwendung von Sensorinformationen eines auf weite und mittlere Entfernungen wirksamen Sensorsystems des Fahrzeugs, beispielsweise eines Kamerasystems und/oder eines Radarsystems und/oder eines Lidarsystems, kann ein Radfahrer auf einem Fahrrad automatisiert erkannt werden. Aus den Sensorinformationen kann zusätzlich eine aktuelle Richtung und aktuelle Geschwindigkeit des Radfahrers bestimmt werden. Unter Verwendung dieser Informationen kann ein Wahrscheinlichkeitsbereich vorhergesagt werden, in dem sich der Radfahrer innerhalb eines Betrachtungszeitraums mit einer hohen Wahrscheinlichkeit bewegen wird. Der Wahrscheinlichkeitsbereich kann durch eine wahrscheinliche Trajektorie des Fahrrads beschrieben werden. Ein zukünftiger Weg des Fahrzeugs kann durch ein Fahrerassistenzsystem des Fahrzeugs, beispielsweise einem Spurhalteassistent vorgegeben sein.

Beim Überholen eines Fahrradfahrers soll ein Sicherheitsabstand zwischen einer rechten Begrenzung des Fahrzeugs und einer linken Begrenzung des Fahrrads beziehungsweise Fahrradfahrers von mindestens 1,5 Meter eingehalten werden. Bei Linksverkehr entsprechend die gegenüberliegenden Seiten. Der Sicherheitsabstand kann abhängig von einer Geschwindigkeit des Fahrzeugs auch größer sein. Zusätzlich kann der erforderliche Sicherheitsabstand größer sein, wenn auf dem Fahrrad ein Kind transportiert wird. Der zukünftige Weg des Fahrzeugs wird automatisch zu dem geänderten Weg angepasst, sodass der Sicherheitsabstand mindestens eingehalten wird.

Der zukünftige Weg des Fahrzeugs kann automatisiert basierend auf den Sensorinformationen geändert werden. Der verfügbare Verkehrsraum kann automatisiert basierend auf den Sensorinformationen ermittelt werden. Der verfügbare Verkehrsraum wird durch andere Verkehrsteilnehmer, Fahrbahnbegrenzungen und die anzuwendenden Verkehrsregeln begrenzt. Innerhalb des verfügbaren Verkehrsraums kann das Fahrzeug konfliktfrei fahren. Wenn genügend Verkehrsraum zur Verfügung steht, kann das Fahrzeug unter Einhaltung des Sicherheitsabstands an dem Fahrrad vorbei fahren. Wenn kein genügender Verkehrsraum verfügbar ist, kann das Fahrzeug nicht sicher auf dem geänderten Weg geführt werden.

Eine Geschwindigkeit des Fahrzeugs kann geändert werden, wenn der geänderte Weg außerhalb beziehungsweise zumindest teilweise außerhalb des verfügbaren Verkehrsraums verläuft. Das Fahrzeug kann gebremst werden, wenn links neben dem Fahrrad nicht genug Platz zum Überholen ist. Dann kann das Fahrrad beispielsweise als Zielfahrzeug für einen Abstandsregeltempomaten des Fahrzeugs verwendet werden.

Der zukünftige Weg des Fahrzeugs kann unter Verwendung der geänderten Geschwindigkeit neu bestimmt werden und das Verfahren erneut ausgeführt werden. Wenn das Fahrzeug langsamer fährt, kann ein geringerer Sicherheitsabstand erforderlich sein, als vor dem Verringern der Geschwindigkeit.

Der zukünftige Weg kann unter Verwendung einer aktuellen Fahrereingabe prädiziert werden. Der zukünftige Weg kann aus einer aktuellen Fahrtrichtung, einer aktuellen Geschwindigkeit, einer aktuellen Lenkbewegung und einer aktuellen Beschleunigungsforderung beziehungsweise Bremsanforderung vorhergesagt werden.

Der Fahrereingabe kann eine Gegenkraft entgegengesetzt werden, wenn die Fahrereingabe von dem geänderten Weg und/oder der geänderten Geschwindigkeit abweicht. Der Fahrer kann wie bei einem Spurhalteassistent beim Lenken unterstützt werden.

Alternativ oder ergänzend kann eine Warnung ausgegeben werden, wenn die Fahrereingabe von dem geänderten Weg und/oder der geänderten Geschwindigkeit abweicht. Die Warnung kann akustisch, optisch und/oder haptisch ausgegeben werden. Durch die Warnung kann der Fahrer vor einer Unterschreitung des Sicherheitsabstands gewarnt werden und/oder selbst den Sicherheitsabstand einhalten.

Der verfügbare Verkehrsraum wird unter Verwendung einer erkannte Verkehrszeichen repräsentierenden Verkehrszeicheninformation und, optional, einer erkannte Fahrbahnmarkierungen repräsentierenden Fahrbahnmarkierungsinformation bestimmt. Verkehrszeichen und Fahrbahnmarkierungen können in der Sensorinformation erkannt werden. Beim Überholen des Fahrrads können die aktuell geltenden Verkehrsregeln eingehalten werden. Beispielswiese kann eine aktuelle Geschwindigkeitsbegrenzung und/oder ein Überholverbot durch die aufgestellten Verkehrszeichen und/oder über die Fahrbahnmarkierung erkannt werden.

Der verfügbare Verkehrsraum kann zusätzlich unter Verwendung einer einen erkannten Gegenverkehrsweg repräsentierenden Gegenverkehrsinformation bestimmt werden. Andere Verkehrsteilnehmer, insbesondere entgegenkommende Fahrzeuge schränken den zum Überholen verfügbaren Verkehrsraum ein. Das Überholen kann unterbleiben, wenn aufgrund anderer Verkehrsteilnehmer nicht genug Platz zur Verfügung steht.

Vor und während des Überholvorgangs kann eine Richtungsanzeigeeinrichtung des Fahrzeugs aktiviert werden. Der Überholvorgang kann durch automatisches Blinken angezeigt werden. Durch das Blinken werden nachfolgende Fahrzeuge auf den Fahrradfahrer aufmerksam gemacht.

Das Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die dazu ausgebildet ist, um die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale der Vorrichtung und des Verfahrens in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

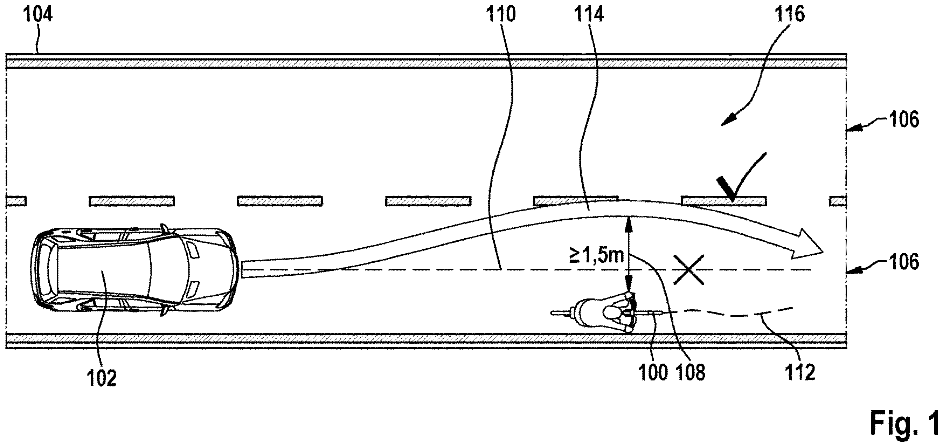

Die Figuren 1 bis 3 zeigen Darstellungen von möglichen Szenarien bei Überholvorgängen von Fahrrädern.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Jeden Tag werden auf Landstraßen Fahrradfahrer überholt. Oft wird der laterale Abstand dabei nicht eingehalten. Das ist zum einen unangenehm für die Fahrradfahrer, zum anderen kann dies sehr gefährlich werden.

Durch den hier vorgestellten Ansatz kann dies unter Verwendung der aktuellen Generation der Fahrerassistenzsysteme vermieden werden. Das hier vorgestellte "Safe cyclist overtaking" kann beispielsweise als eine Erweiterung der ACC Funktion (Abstandsregelautomat) ausgeführt sein. Dabei wird ein automatisches Überholmanöver eingeleitet, wenn mit eingeschaltetem ACC gefahren wird und ein Fahrradfahrer auf der eigenen Spur voraus fährt.

Die Figuren 1 bis 3 zeigen Darstellungen von möglichen Szenarien bei Überholvorgängen von Fahrrädern 100. Dabei fährt jeweils ein Fahrrad 100 vor einem Fahrzeug 102 auf einer Straße 104 mit je einem Richtungsfahrstreifen 106 pro Fahrtrichtung, also beispielsweise einer typischen Landstraße. Das Fahrzeug 102 fährt schneller als das Fahrrad 100. Das Fahrrad 100 fährt am rechten Rand des Richtungsfahrstreifens 106, auf dem sich das Fahrzeug 102 dem Fahrrad 100 von hinten nähert. Um das Fahrrad 100 mit dem erforderlichen Sicherheitsabstand 108 von mindesten 1,5 Metern überholen zu können, ist es bei den hier dargestellten Szenarien immer erforderlich auf den anderen Richtungsfahrstreifen 106 auszuweichen.

Das Fahrzeug 102 weist eine Vorrichtung gemäß dem hier vorgestellten Ansatz auf, auf der ein Verfahren zum Absichern eines Überholvorgangs gemäß einem Ausführungsbeispiel ausgeführt wird. Die Vorrichtung verarbeitet Sensorinformationen eines Sensorsystems des Fahrzeugs 102, um die Straße 104, die Richtungsfahrstreifen, Verkehrszeichen und andere Verkehrsteilnehmer, wie das Fahrrad 100 zu erkennen. Einen zukünftigen Weg 110 des Fahrzeugs 102 liest die Vorrichtung beispielsweise von einem Navigationssystem des Fahrzeugs 102 ein. Ebenso kann der zukünftige Weg 110 von einem Fahrerassistenzsystem des Fahrzeugs 102 eingelesen werden. Alternativ kann der zukünftige Weg 110 aus aktuellen Fahrereingaben, wie einer Lenkradstellung, einer Fahrpedalstellung und/oder einer Bremspedalstellung extrapoliert werden. Aus den Sensorinformationen bestimmt die Vorrichtung ferner eine wahrscheinliche Trajektorie 112 des Fahrrads 100. Die wahrscheinliche Trajektorie wird dabei unter Verwendung einer aktuellen Geschwindigkeit und Richtung des Fahrrads 102 extrapoliert.

In Fig. 1 ist dargestellt, wie von der Vorrichtung der zukünftige Weg 110 automatisch geändert wird, wenn der Sicherheitsabstand 108 zu der wahrscheinlichen Trajektorie 112 des Fahrrads 100 unterschritten wird. Ein geänderter Weg 114 verläuft von dem Fahrzeug 102 aus gesehen weiter links. Das Fahrzeug 102 wird über Steuersignale von der Vorrichtung auf dem geänderten Weg 114 geführt. Auf dem geänderten Weg 114 hält das Fahrzeug 102 mindestens 1,5 Meter Sicherheitsabstand 108 zu dem Fahrrad 100 ein. Das Fahrzeug 102 wird zumindest teilweise auf einem Bogen über den entgegengesetzten Richtungsfahrstreifen 106 geführt, da aufgrund von fehlendem Gegenverkehr und ohne Überholverbot ein verfügbarer Verkehrsraum 116 groß genug dazu ist.

In einem Ausführungsbeispiel wird automatisch ein linker Blinker des Fahrzeugs 102 gesetzt, bevor das Fahrzeug 102 auf dem geänderten Weg 114 den Überholvorgang einleitet.

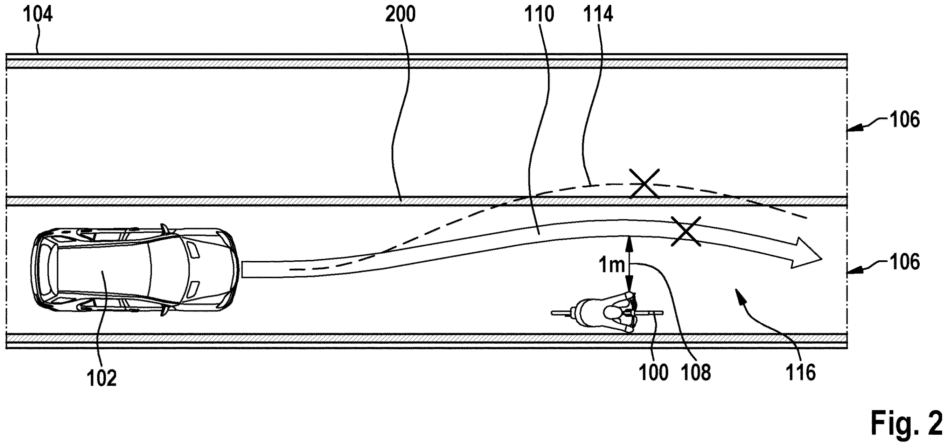

In Fig. 2 ist dargestellt, wie der Sicherheitsabstand 108 durch den zukünftigen Weg 110 unterschritten würde, da das Fahrzeug 102 aufgrund einer durchgezogenen Mittellinie 200 mit maximal nur einem Meter Abstand an dem Fahrrad 100 vorbeifahren könnte. Der geänderte Weg 114, der mit genügend Sicherheitsabstand 108 an dem Fahrrad vorbeiführen würde, kreuzt die Mittellinie 200 und liegt damit teilweise außerhalb des verfügbaren Verkehrsraums 116. Daher wird das Fahrrad 100 als vorausfahrendes Fahrzeug eingestuft und eine Geschwindigkeit des Fahrzeugs 102 an eine Geschwindigkeit des Fahrrads 100 angepasst, bis das Überholverbot endet und zusätzlich auch der verfügbare Verkehrsraum 116 nicht durch Gegenverkehr eingeschränkt ist.

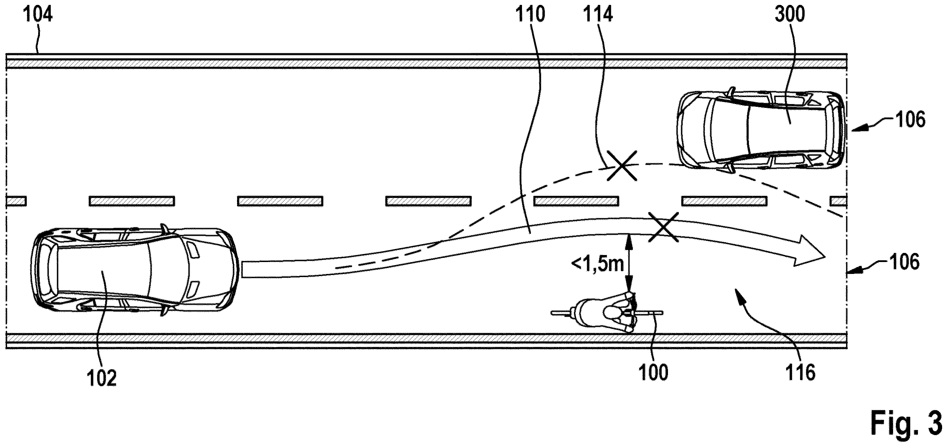

In Fig. 3 ist ebenfalls dargestellt, wie der Sicherheitsabstand 108 durch den zukünftigen Weg 110 unterschritten würde. Hier besteht im Gegensatz zu der Darstellung in Fig. 2 kein Überholverbot. Da jedoch ein entgegenkommendes Fahrzeug 300 auf dem entgegengesetzten Richtungsfahrstreifen 106 fährt, ist der verfügbare Verkehrsraum 116 so gering, dass das Fahrzeug 102 auch hier nicht auf dem geänderten Weg 114 geführt werden kann. Folglich wird das Fahrzeug 102 wie in Fig. 2 abgebremst und fährt hinter dem Fahrrad 100 her, bis der entgegengesetzte Richtungsfahrstreifen 106 frei ist.

Die hier vorgestellte Funktion berücksichtigt, dass ein lateraler Mindestabstand zum Fahrradfahrer eingehalten wird, die Geschwindigkeit nicht überschritten wird, nur über die Mittellinie gefahren wird, wenn dies durch die Straßenregeln erlaubt ist und wie in Fig. 1 kein Gegenverkehr vorhanden ist. Sollte wie in Fig. 2 der Platz zwischen Mittellinie 200 und Fahrradfahrer nicht ausreichend sein, so darf kein automatisches Überholmanöver eingeleitet werden. Die Linien können durch einen bildgebenden Sensor detektiert werden.

In einem Ausführungsbeispiel wird der Fahrer über eine Benutzerschnittstelle (HMI) gefragt, ob trotzdem überholt werden soll. In einem Ausführungsbeispiel erfolgt bei deaktiviertem Abstandsregeltempomat (ACC) eine Warnung, wenn der Freiraum zum Überholen nicht ausreichend ist. Wird manuell überholt, so wird der benötigte Abstand in einem Ausführungsbeispiel durch einen leichten Lenkeingriff korrigiert.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Absichern eines Überholvorgangs eines auf ein Fahrrad (100) auffahrenden Fahrzeugs (102), wobei ein zukünftiger Weg (110) des Fahrzeugs (102) automatisiert geändert wird, wenn ein lateraler Sicherheitsabstand (108) zu einer wahrscheinlichen Trajektorie (108) des Fahrrads (100) unterschritten wird, wobei das Fahrzeug (102) auf dem geänderten Weg (114) geführt wird, wenn er innerhalb eines verfügbaren Verkehrsraums (116) verläuft,
wobei der verfügbare Verkehrsraum (116) unter Verwendung einer erkannte Verkehrszeichen repräsentierenden Verkehrszeicheninformation bestimmt wird.

2. Verfahren gemäß Anspruch 1, bei dem der zukünftige Weg (110) des Fahrzeugs (102) automatisiert basierend auf Sensorinformationen eines Sensorsystems des Fahrzeugs (102) geändert wird und der verfügbare Verkehrsraum (116) automatisiert basierend auf den Sensorinformationen ermittelt wird.

3. Verfahren nach einem der Ansprüche 1 und 2, bei dem eine Geschwindigkeit des Fahrzeugs (102) geändert wird, wenn der geänderte Weg (114) außerhalb des verfügbaren Verkehrsraums (116) verläuft.

4. Verfahren gemäß Anspruch 3, bei dem der zukünftige Weg (110) des Fahrzeugs (102) unter Verwendung der geänderten Geschwindigkeit neu bestimmt wird und das Verfahren erneut ausgeführt wird.

5. Verfahren gemäß einem der vorhergehenden Ansprüche, bei dem der zukünftige Weg (114) unter Verwendung einer aktuellen Fahrereingabe prädiziert wird.

6. Verfahren gemäß Anspruch 5, bei dem der Fahrereingabe eine Gegenkraft entgegengesetzt wird, wenn die Fahrereingabe von dem geänderten Weg (114) und/oder der geänderten Geschwindigkeit abweicht.

7. Verfahren gemäß einem der Ansprüche 5 bis 6, bei dem eine Warnung ausgegeben wird, wenn die Fahrereingabe von dem geänderten Weg (114) und/oder der geänderten Geschwindigkeit abweicht.

8. Verfahren gemäß einem der vorhergehenden Ansprüche, bei dem der verfügbare Verkehrsraum (116) unter Verwendung einer einen erkannten Gegenverkehrsweg repräsentierenden Gegenverkehrsinformation bestimmt wird.

9. Verfahren gemäß einem der vorhergehenden Ansprüche, bei dem vor und während des Überholvorgangs eine Richtungsanzeigeeinrichtung des Fahrzeugs (102) aktiviert wird.

10. Vorrichtung (100), wobei die Vorrichtung dazu ausgebildet ist, das Verfahren gemäß einem der vorhergehenden Ansprüche in entsprechenden Einrichtungen auszuführen, umzusetzen und/oder anzusteuern.

11. Computerprogrammprodukt, das dazu eingerichtet ist, das Verfahren gemäß einem der Ansprüche 1 bis 9 auszuführen, umzusetzen und/oder anzusteuern.

12. Maschinenlesbares Speichermedium, auf dem das Computerprogrammprodukt gemäß Anspruch 11 gespeichert ist.

13. Verfahren gemäß einem der Ansprüche 1 bis 9, wobei die wahrscheinliche Trajektorie einen Wahrscheinlichkeitsbereich angibt, in dem sich der Radfahrer innerhalb eines Betrachtungszeitraums mit einer hohen Wahrscheinlichkeit bewegen wird.

14. Verfahren gemäß einem der Ansprüche 1 bis 9 und 13, wobei der laterale Sicherheitsabstand mindestens 1,5 m beträgt.

## Claims

1. Method for improving the safety of an overtaking manoeuvre by a vehicle (102) driving up to a bicycle (100), wherein a future path (110) of the vehicle (102) is altered in an automated manner if a lateral safety distance (108) from a probable trajectory (108) of the bicycle (100) is breached, the vehicle (102) being guided on the altered path (114) if said path runs within an available traffic area (116),
the available traffic area (116) being determined using road sign information that represents identified road signs.

2. Method according to Claim 1, in which the future path (110) of the vehicle (102) is altered in an automated manner on the basis of sensor information of a sensor system of the vehicle (102), and the available traffic area (116) is ascertained in an automated manner on the basis of the sensor information.

3. Method according to either of Claims 1 and 2, in which a speed of the vehicle (102) is altered if the altered path (114) runs outside the available traffic area (116).

4. Method according to Claim 3, in which the future path (110) of the vehicle (102) is redefined using the altered speed, and the method is carried out again.

5. Method according to one of the preceding claims, in which the future path (114) is predicted using a current driver input.

6. Method according to Claim 5, in which the driver input is countered by an opposing force if the driver input deviates from the altered path (114) and/or the altered speed.

7. Method according to either of Claims 5 to 6, in which a warning is output if the driver input deviates from the altered path (114) and/or the altered speed.

8. Method according to one of the preceding claims, in which the available traffic area (116) is determined using oncoming traffic information that represents an identified oncoming traffic path.

9. Method according to one of the preceding claims, in which a direction indicator device of the vehicle (102) is activated before and during the overtaking manoeuvre.

10. Apparatus (100), wherein the apparatus is configured to carry out, implement and/or control the method according to one of the preceding claims in corresponding devices.

11. Computer program product designed to carry out, implement and/or control the method according to one of Claims 1 to 9.

12. Machine-readable storage medium on which the computer program product according to Claim 11 is stored.

13. Method according to one of Claims 1 to 9, wherein the probable trajectory indicates a probability range that the cyclist has a high probability of occupying within a period under consideration.

14. Method according to one of Claims 1 to 9 and 13, wherein the lateral safety distance is at least 1.5 m.

## Revendications

1. Procédé permettant de sécuriser une opération de dépassement d'un véhicule (102) s'approchant d'un vélo (100), dans lequel un trajet futur (110) du véhicule (102) est modifié de manière automatisée si une distance de sécurité latérale (108) par rapport à une trajectoire probable (108) du vélo (100) est soupassée, dans lequel le véhicule (102) est guidé sur le trajet modifié (114) lorsqu'il s'étend à l'intérieur d'un espace de circulation (116) disponible,dans lequel l'espace de circulation (116) disponible est déterminé en utilisant une information de panneaux de signalisation représentant des panneaux de signalisation reconnus.

2. Procédé selon la revendication 1, dans lequel le trajet futur (110) du véhicule (102) est modifié de manière automatisée sur la base d'informations de capteur d'un système de capteur du véhicule (102), et l'espace de circulation (116) disponible est établi de manière automatisée sur la base des informations de capteur.

3. Procédé selon l'une quelconque des revendications 1 et 2, dans lequel une vitesse du véhicule (102) est modifiée si le trajet modifié (114) s'étend à l'extérieur de l'espace de circulation (116) disponible.

4. Procédé selon la revendication 3, dans lequel le trajet futur (110) du véhicule (102) est déterminé à nouveau en utilisant la vitesse modifiée, et le procédé est exécuté à nouveau.

5. Procédé selon l'une quelconque des revendications précédentes, dans lequel le trajet futur (114) est prédit en utilisant une entrée de conducteur actuelle.

6. Procédé selon la revendication 5, dans lequel une force antagoniste s'oppose à l'entrée de conducteur si l'entrée de conducteur dévie du trajet modifié (114) et/ou de la vitesse modifiée.

7. Procédé selon l'une quelconque des revendications 5 à 6, dans lequel un avertissement est émis si l'entrée de conducteur dévie du trajet modifié (114) et/ou de la vitesse modifiée.

8. Procédé selon l'une quelconque des revendications précédentes, dans lequel l'espace de circulation (116) disponible est déterminé en utilisant une information de trafic en sens inverse représentant un trajet de trafic en sens inverse reconnu.

9. Procédé selon l'une quelconque des revendications précédentes, dans lequel un indicateur de direction du véhicule (102) est activé avant et après l'opération de dépassement.

10. Dispositif (100), le dispositif étant réalisé pour exécuter, mettre en oeuvre et/ou piloter le procédé selon l'une quelconque des revendications précédentes dans des équipements correspondants.

11. Produit de programme informatique, qui est conçu pour exécuter, mettre en oeuvre et/ou piloter le procédé selon l'une quelconque des revendications 1 à 9.

12. Support de stockage lisible par machine sur lequel est enregistré le produit de programme informatique selon la revendication 11.

13. Procédé selon l'une quelconque des revendications 1 à 9, dans lequel la trajectoire probable indique une plage de probabilité dans laquelle le cycliste se déplacera très probablement à l'intérieur d'une période d'observation.

14. Procédé selon l'une quelconque des revendications 1 à 9 et 13, dans lequel la distance de sécurité latérale est d'au moins 1,5 m.
